# EUROPEAN PATENT APPLICATION

(11) **EP 2 373 089 A1**
(43) Date of publication of application: **05.10.2011**
(21) Application number: 09835000.2
(22) Date of filing: 25.12.2009
(51) Int. Cl.: H04W 36/28, H04W 36/36, H04W 88/06

(54) **CONTROL STATION, MOBILE STATION, AND MOBILE COMMUNICATION SYSTEM**

(30) Priority: 26.12.2008 JP 2008334123
(71) Applicant: Sharp Kabushiki Kaisha, Osaka-shi, Osaka 545-8522 (JP)
(72) Inventor: ARAMOTO, Masafumi, Osaka 545-8522 (JP); NAOE, Hirokazu, Osaka 545-8522 (JP)
(74) Representative: Müller - Hoffmann & Partner
(86) International application number: PCT/JP2009/071548
(87) International publication number: WO 2010/074204

(57) **Abstract**

A PGW 20 which is set with a path for performing communication of a plurality of flows with a UE 10 connectable to, an access network A in which a bearer transfer path that guarantees a predetermined QoS has been established, and an access network B in which a transfer path different from access network A has been established, by way of the transfer path of access network A, receives a specific bearer switching request including information on a flow from UE 10, and, switches the communication path of the flow included in the specific bearer switching request, from access network A to access network B. This arrangement makes it possible to provide the control station or the like that can perform a handover of a specific flow selected from the plurality of flows to a different transfer path when the mobile station is handed over.

## Description

### Technical Field

The present invention relates to a control station which is set with a path for performing communication of a plurality of flows with a mobile station connectable to, a first access network in which a bearer transfer path that guarantees a predetermined QoS has been established, and a second access network in which a transfer path different from the first access network has been established, by way of the transfer path of the first access network, and the like.

### Background Art

Conventionally, in mobile communication systems, there have been various known techniques to control the handover of a mobile station between different networks (e. g. , between a 3GPP standard network and a WLAN, or the like).

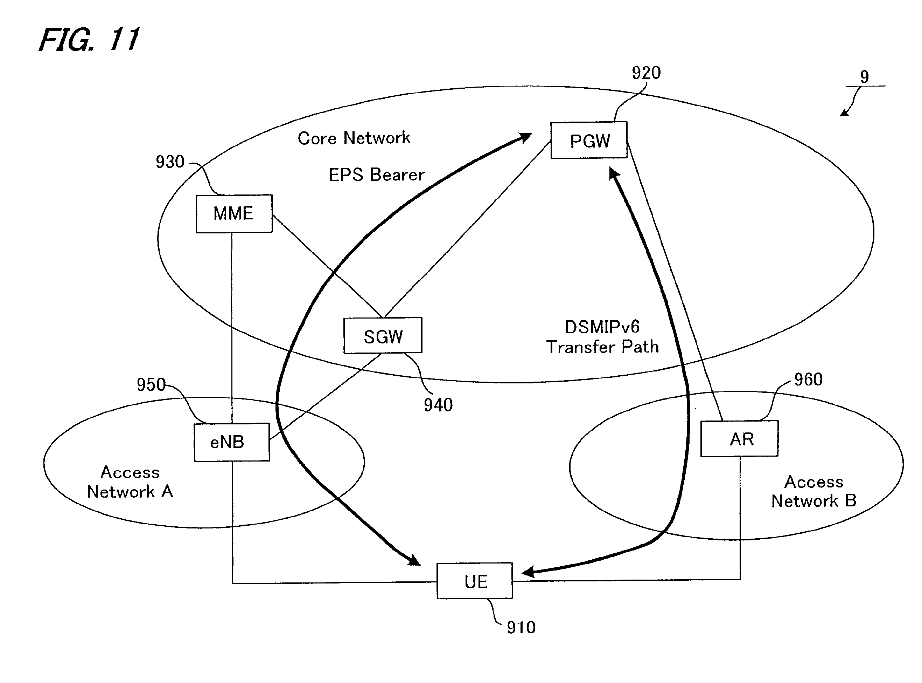

Mobile control (handover) in the conventional mobile communication networks is defined in non-patent document 1 and non-patent document 2, for example. Now, a conventional mobile communication system will be described with reference to FIG. 11. A mobile communication system 9 in FIG. 11 is a mode of a mobile communication system described in non-patent document 1.

In mobile communication system 9 in FIG. 11, a plurality of access networks (access network A, access network B) are connected to a core network. A UE (User Equipment; mobile station) 910 is also connected to the core network via an access network. UE 910 is connectable to the core network by way of either access network A or access network B.

Here, access network A is a communication path for which QoS can be set, for example a network defined by the 3GPP standard. Provided for access network A is an eNB (base station) 950 to which UE 910 is connected. UE 910 is connected to the core network via eNB 950 and a gateway SGW 940 (Serving GW).

Further, a PGW (Packet Data Gateway: control station) 920 forwarding communication data to UE 910 is installed in the core network. PGW 920 is connected to access network A via SGW 940.

Further, provided for the core network is a MME (Mobility Management Entity: management station) 930 which receives a request for transfer path establishment from UE 910 and takes control of the procedure of establishing an EPS bearer as a transfer path between UE 910 and PGW 920 via eNB 950 and SGW 940. The EPS bearer is a transfer path between UE 910 and PGW 920 by way of access network A.

On the other hand, access network B is provided with an AR (Access Router) 960 to which UE 910 connects, so that UE 910 is connected with PGW 920 in the core network via AR 960 by establishing a transfer path based on DSMIPv6 (Dual-Stack MIPv6) (see non patent document 3 for example).

UE 910 is connected to PGW 920 by a transfer path, either the DSMIPv6 transfer path or the EPS bearer. A similar transfer path is established at a UE at the other communication end, so that communication between the UEs are performed using respective communication paths via PGW 920.

Further, there is a defined handover procedure relating to a case where communication that UE 910 is transmitting/receiving by way of the DSMIPv6 transfer path via access network B is changed over to the bearer transfer path via access network A to continue communication.

### Prior Art Documents

### Non-Patent Document

Non-Patent Document 1: TS23.402 Architecture enhancements for non-3GPP accesses
Non-Patent Document 2: TS23.401 General Packet Radio Service (GPRS) enhancements for Evolved Universal Terrestrial Radio Access Network (E-UT RAN) access
Non-Patent Document 3: Mobile IPv6 Support for Dual Stack Hosts and Routers, draft-ietf-mext-nemo-v4traversal-05.txt

### Summary of the Invention

### Problems to be solved by the Invention

The transmission capacity of the communication path in the conventional mobile communication system (packet communication system) was low in speed while there were no applications that essentially need broadband communication. Therefore, it was not necessary to perform complicated control such as to providing for each application an individual communication path allotted with a bandwidth required for that application.

Now, thanks to the development of access network technologies having various different transmission capacities, the core network has become possible to accommodate a plurality of access networks based on different radio access system technologies, as shown in the conventional example. Each radio access technology has different characteristics; some exhibit a high transmission capacity but present a small radio covering range so as to be used for local connection such as a hotspot, others exhibit a low transmission capacity but present a large radio covering range so as to be used for wide area services. By combination of these, a mobile communication terminal is adapted to be able to perform broadband communication in areas where a radio access service having a high transmission capacity is provided and also continue communication even when the terminal moves to the other areas, though the speed becomes low.

However, in recent years, applications have become diversified with the explosive spread of the internet. Various types have become general, such as WEB access, FTP and the like that do not need to secure a bandwidth which is equal or greater than the predetermined value, voice communication and the like that do not need a large bandwidth but need to have the least minimum bandwidth, and those, such as video distribution and others, that have difficulty in operation if a large bandwidth is not assured.

If a transfer path in conformity with the characteristic of that application can be secured for an application, it is possible to prevent a transfer path having a too large bandwidth from being allotted to an application that does not need to have that large bandwidth, and it is also possible to allot a large enough bandwidth to an application that needs to have a large bandwidth, thus making it possible to make efficient use of the band.

In the above-described conventional technology, when UE910 that is performing communication on the EPS bearer via access network A as shown in FIG. 11, performs a handover to access network B, a DSMIP transfer path via access network B is established so that all the communication of UE 910 is switched from the EPS bearer transfer path to the DSMIPv6 transfer path to continue communication.

Here, it is possible to presume a situation in which UE 910 is performing a plurality of flows of communication through the EPS bearer communication path. A flow is a communication classification that can be identified based on the application or the party at the other end. For example, applications such as a voice communication and WEB access can be identified as different flows.

In conventional handovers, UE 910 and PGW 920 were not controlled as to the communication paths for flows, and it was necessary to hand over all the flows of UE 910 by switching the communication paths all at once at the time of a handover. Specifically, when a handover is performed from a state in which a voice communication flow 1 and a WEB access flow 2 are being performed through access network A (EPS bearer), the DSMIPv6 transfer path as a communication path via access network B is established, and the transfer paths for flow 1 and flow 2 are switched in UE 910 and PGW 920 from the bearer transfer path to the DSMIPv6 transfer path to achieve a handover. That is, the bearer transfer path and the DSMIPv6 transfer path could not be held at the same time.

Access network A and access network B can be constructed of different access networks, such as LTE, radio LAN and the like, and are different in transmission rate, presence or absence of QoS and other performance. On the other hand, each application is different from others in demanded transmission rate, necessity of QoS and other characteristics, depending on the property of the application. Accordingly, the suited access network is different depending on the flow, but in the prior art, there was no means that controls the transfer paths for flows, so that handover is performed as a whole and it was impossible to hand over a specific flow alone.

Further, the core network has tended to accommodate a plurality of access systems, so that the handover procedure by a unit of flow needs to be a method that is more flexible to the expansion of the future network system. Specifically, in addition to the LTE and radio LAN access networks which are currently presumed to accommodate, such a method needs to be applicable when an access network based on a radio access technology that will be developed in the future is attempted to be accommodated.

Accordingly, it is possible to realize a more expandable handover of a flow by performing a handover procedure based on one of a plurality of radio access technologies instead of performing a method that needs expansion for each of the radio access technologies of individual access networks. However, no consideration in this respect has been made in the prior art.

In view of the above-described problem, it is therefore an object of the present invention to provide a control station and the like that, when a mobile station performs a handover, can select a specific flow among a plurality of flows and perform its handover to a different transfer path.

### Means for Solving the Problems

In view of the above problems, a control station of the present invention resides in a control station which is set with a path for performing communication of a plurality of flows with a mobile station connectable to, a first access network in which a bearer transfer path that guarantees a predetermined QoS has been established, and a second access network in which a transfer path different from the first access network has been established, by way of the transfer path of the first access network, comprising: a specific bearer switching request receiving means for receiving a specific bearer switching request including information on a flow from a mobile station; and a switching means for switching the communication path of the flow included in the specific bearer switching request, from a first access network to a second access network.

The control station is also characterized in that for other than the flow included in the specific bearer switching request, communication is continued through the path set on the first access network.

The control station is also characterized in that the specific bearer switching request further includes a transceiver identifier representing a transfer path, and, when the transfer path corresponding to the transceiver identifier included in the specific bearer switching request has been established in the second access network, the switching means switches the path of the flow included in the specific bearer switching request to the second access network.

A mobile station of the present invention resides in a mobile station connectable to, a first access network in which a bearer transfer path that guarantees a predetermined QoS has been established, and a second access network in which a transfer path different from the first access network has been established, and set with a path for performing communication of a plurality of flows with a control station by way of the transfer path of the first access network, comprising: a specific bearer switching request transmitting means for transmitting a specific bearer switching request including information on a flow to be switched to a transfer path of a second access network, among a plurality of flows being communicated by way of a transfer path of a first access network, to the control station.

Further, a mobile communication system of the present invention resides in amobile communication systemcomprising: a mobile station connectable to, a first access network in which a bearer transfer path that guarantees a predetermined QoS has been established, and a second access network in which a transfer path different from the first access network has been established; and a control station set with a path that performs communication of a plurality of flows with the mobile station by way of the transfer path of the first access network, wherein the mobile station comprising: a specific bearer switching request transmitting means for transmitting a specific bearer switching request including information on a flow to be switched the transfer path of the second access network, among the plurality of flows being communicated by way of the transfer path of the first access network, to the control station, and the control station comprising: a specific bearer switching request receiving means for receiving the specific bearer switching request including information on the flow from the mobile station; anda switching means for switching a communication path of the flow included in the specific bearer switching request, from the first access network to the second access network.

### Advantages of the Invention

According to the present invention, the mobile communication terminal having a plurality of transceivers establishes a plurality of transfer paths via a plurality of access networks to connect to a core network. The mobile communication terminal can perform a handover by selecting a transfer path for each application and perform communication by switching the transfer path depending on the characteristics of the application, such as the necessary bandwidth and the like.

Further, transmitting/receiving of control information for performing a handover can be performed by one of the plurality of access networks. With this configuration, even when a plurality of access networks that need different mobile control schemes are connected to the core network, it is not necessary to make expansion for a new handover to deal with the mobile control scheme for each access network, hence it is possible to perform a handover by a highly expandable method.

### Brief Description of the Drawings

[FIG. 1] is a diagram for illustrating the overall scheme of a mobile communication system in the present embodiment.
[FIG. 2] is a diagram for illustrating the configuration of a UE (mobile station) in the present embodiment.
[FIG. 3] is a diagram for illustrating the configuration of a PGW in the present embodiment.
[FIG. 4] is a diagram for illustrating one data configuration example of flow management tables in the present embodiment.
[FIG. 5] is a diagram for illustrating one data configuration example of a DSMIP transfer path management table in the present embodiment.
[FIG. 6] is a diagram for illustrating the procedure of communication path establishment in the present embodiment.
[FIG. 7] is a diagram for illustrating a handover procedure in the present embodiment.
[FIG. 8] is a diagram for illustrating the processing flow in the present embodiment.
[FIG. 9] is a diagram for illustrating one data configuration example of flow management tables in the present embodiment.
[FIG. 10] is a diagram for illustrating one data configuration example of a DSMIP transfer path management table in a variational example.
[FIG. 11] is a diagram for illustrating the overall scheme of a conventional mobile communication system.

### Modes for Carrying Out the Invention

Referring next to the drawings, the embodiments of a mobile communication system to which the present invention is applied will be described in detail.

### [1. Network Configuration]

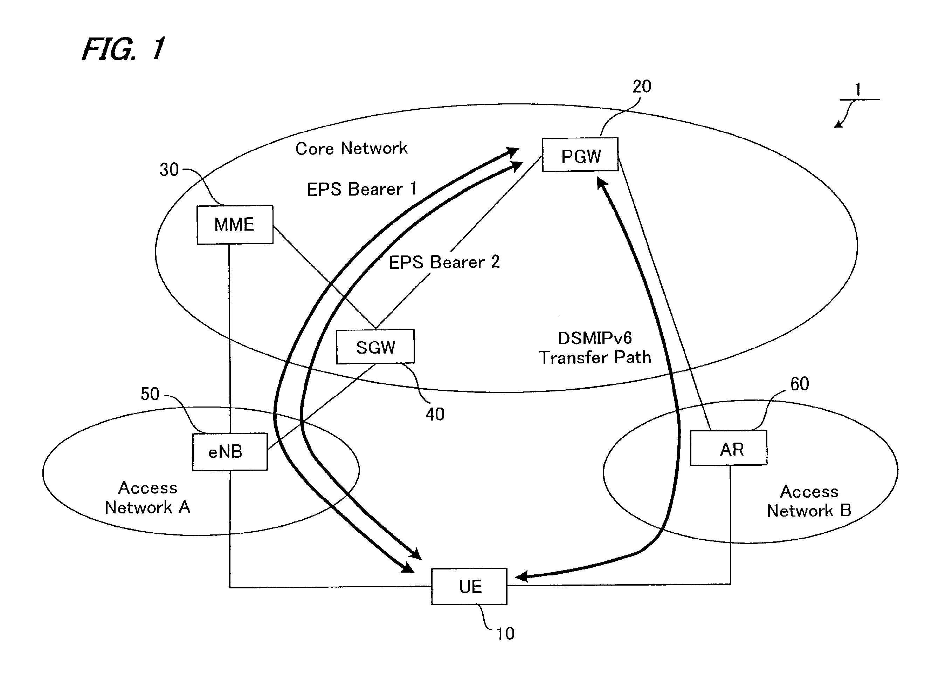

To begin with, the network configuration in the present embodiment will be described with reference to FIG. 1. FIG. 1 is a diagram for illustrating the overall scheme of a mobile communication system 1 when the present invention is applied. As shown in this figure, in the mobile communication system, an access network A and an access network B are connected to a core network. Here, access network A and access network B are assumed to be networks based on different radio access systems; for example, access network A is assumed to be a network using LTE as a 3GPP standardized access network while one example of access network B is assumed to be a network based on a non-3GPP access system using a radio LAN or the like.

First, a UE 10 (mobile station: User Equipment) is connected to the core network via a plurality of radio access networks. Access network A includes a base station (eNB 50) to which UE 10 connects and is connected to the core network via a gateway (SGW 40).

The core network is installed with a GW (PGW 20) that forwards the communication data transmitted from another mobile station to the mobile station and is connected to SGW 40. Further, the core network is installed with a management apparatus (MME 30) that receives a request for transfer path establishment from UE 10 and takes control of the procedure for establishing a bearer (EPS bearer) as a transfer path between UE 10 and PGW 20 via eNB 50 and SGW 40. The EPS bearer is a QoS-supporting transfer path between UE 10 and PGW 20 by way of access network A.

Access network B is installed with an access router (AR 60) to which UE 10 connects, so that UE 10 is connected with PGW 20 in the core network via AR 60 by establishing a transfer path based on DSMIPv6.

Access network A is, for example a LTE (Long Term Evolution) as a radio access network that is defined by 3GPP as a communication standardization organization for mobile phone networks. Access network B is an access network such as a radio LAN, WiMAX or the like. The core network is based on SAE (System Architecture Evolution) defined by 3GPP.

As above, in the mobile communication system using packet communication in the present embodiment, UE 10 is connected to the core network by the transfer path of the bearer that supports QoS via access network A and by the transfer path based on DSMIPv6 via access network B.

### [2. Equipment Configurations]

Subsequently, each apparatus configuration will be briefly described with reference to the drawings. Here, SGW 40, MME 30, eNB 50 and AR 60 have the same configurations as those of the conventional equipment in SAE, so that detailed description is omitted.

### [2.1 UE Configuration]

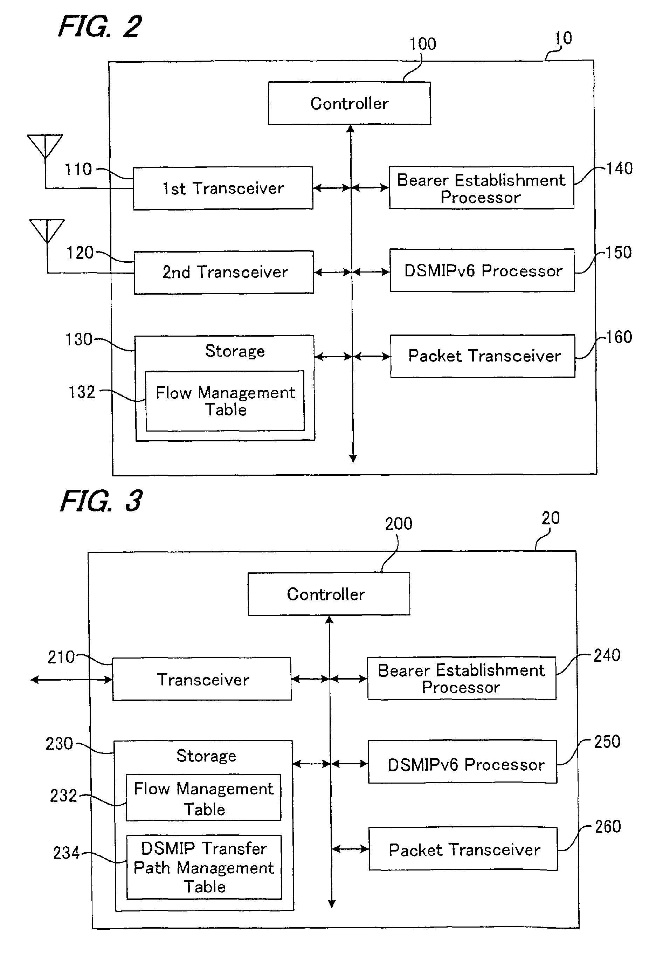

First, the configuration of UE 10 as a mobile station will be described using a block diagram in FIG. 2. Here, as a specific example of UE 10, a terminal such as mobile terminal, PDA or the like, which simultaneously connects to the core network via a plurality of access networks, is supposed.

As shown in FIG. 2, UE 10 includes a controller 100, a first transceiver 110, a second transceiver 120, a storage 130, a bearer establishment processor 140, a DSMIPv6 processor 150 and a packet transceiver 160.

Controller 100 is a functional unit for controlling UE 10. Controller 100 reads out and executes various programs stored in storage 130 to realize processes.

First transceiver 110 and second transceiver 120 are functional units for enabling UE 10 to access each access network. First transceiver 110 is the functional unit for connection to access network A and second transceiver 120 is the functional unit for connection to access network B. Connected to first transceiver 110 and second transceiver 120 are external antennas, respectively.

Storage 130 is a functional unit for storing programs, data, etc., necessary for UE 10 to perform various kinds of operations. Storage 130 further stores a flow management table 132 for storing flow information for identifying applications in association with transfer paths for transmission. This flow management table 132 is referred to when packet transceiver 160 transmits data so as to select a transfer path for each flow, whereby the data is transmitted from the transceiver corresponding to the transfer path.

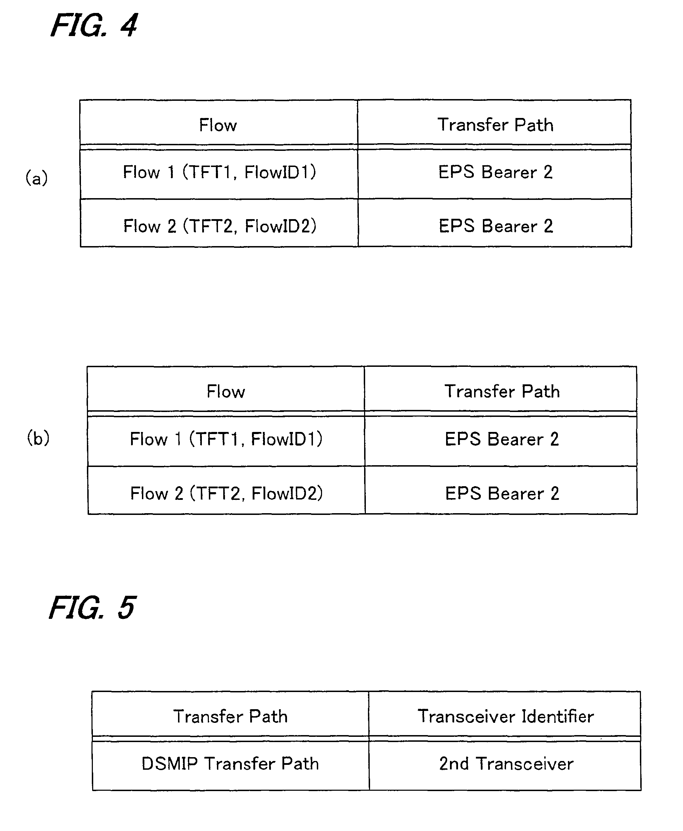

Here, FIG. 4 (a) shows one data configuration example of the flow management table. As shown in FIG. 4 (a), a flow (e.g., "flow 1 (TFT1, FlowID1) " is stored in association with a transfer path (e.g., "EPS bearer 2").

Bearer establishment processor 140 is a functional unit that executes a process for establishing an EPS bearer as a communication path to PGW 20 via access network A, by way of SGW 40.

DSMIPv6 processor 150 is a functional unit for establishing a transfer path based on DSMIPv6 to connect to the core network via access network B. Packet transceiver 160 is a functional unit that transmits and receives specific data (packets). The unit decomposes the data received from the upper layer into packets to be transmitted. The unit also realizes a function of transferring received packets to the upper layer.

### [2.2 PGW Configuration]

Next, the configuration of PGW 20 in the present embodiments will be described based on FIG. 3. PGW 20 includes a controller 200, a transceiver 210, a storage 230, a bearer establishment processor 240, a DSMIPv6 processor 250 and a packet transceiver 260.

Transceiver 210 is a functional unit that is wired to a router or a switch to transmit and receive packets. For example, this unit performs transmission and reception using Ethernet (registered trademark) that is usually used as a network connecting system, or the like.

Storage 230 is a functional unit for storing programs, data, etc. , necessary for PGW 20 to execute various operations. Storage 230 further stores a flow management table 232 for storing flow information for identifying applications in association with transfer paths for transmission and a DSMIP transfer path management table 234 for associating a DSMIP transfer path with a transceiver identifier in UE 10. Flow management table 232 is referred to when packet transceiver 260 transmits data so as to select a transfer path for each flow, whereby the data is transmitted from the transceiver corresponding to the transfer path.

Here, FIG. 4 (b) shows one data configuration example of the flow management table. As shown in FIG. 4(b), a flow (e.g., "flow 1 (TFT1, FlowID1)" is stored in association with a transfer path (e.g., "EPS bearer 2").

DSMIP transfer path management table 234 is a table that stores the transceiver identifier included in the aftermentioned specific bearer switching request received from UE 10 in association with a transfer path. For example, when the transceiver identifier indicates "the second transceiver" as shown in FIG. 5, it is determined that DSMIP transfer path (access network B) is used as a transfer path to perform communication. Here, as a specific example of a transceiver identifier, the interface identification information or the like of the link local address prepared based on EUI64 of UE 10 may be used.

Bearer establishment processor 240 is a functional unit that executes a process for establishing an EPS bearer as a communication path to UE 10 via access network A, by way of SGW 40.

DSMIPv6 processor 250 is a functional unit for establishing a transfer path based on DSMIPv6 to connect to UE 10 via access network B. Packet transceiver 260 is a functional unit that transmits and receives specific data (packets).

### [3. Communication Path Establishment Procedure]

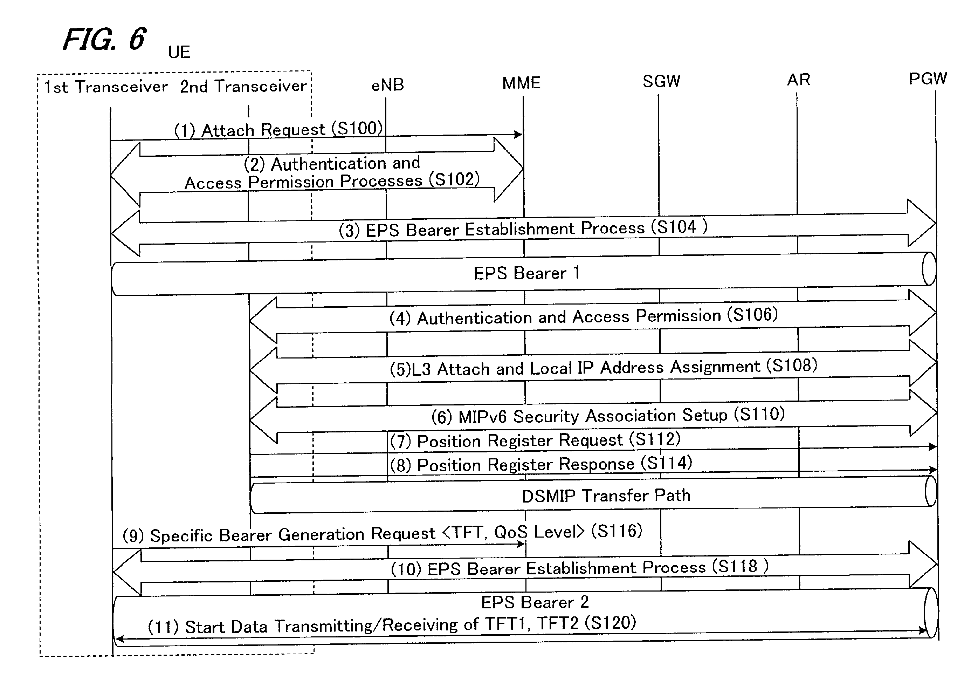

Next, in the network shown in FIG. 1, the procedures of UE 10, AR 60 and PGW 20 when UE 10 connects to the core network via access network B to establish a DSMIPv6 communication path, will be described using a sequence diagram in FIG. 6. Here, UE 10 performs a transfer path establishment process via access network A by using first transceiver 110 connected to access network A and performs a transfer path establishment process via access network B by using second transceiver 120 connected.

(1) First, UE 10 transmits an attach request to MME 30, following the conventional method (S100). The attach request includes the identification information of UE 10 to make UE 10 to be authorized and permitted to access. This also includes an access point name (APN) for identifying PGW 20 to be connected.

(2) MME 30 having received the attach request executes processes of authentication and access permission by the procedures with UE 10 and eNB 50, following the conventional method (S102). MME 30 performs authentication and gives access permission based on the subscriber identification information etc. of UE 10 included in the attach information.

(3) MME 30 executes a process of establishing a default EPS bearer (EPS bearer 1) for UE 10 that was permitted to access (S104). The procedure is performed following the conventional procedure, by transmitting/receiving of control messages between UE 10, eNB 50, MME 30, SGW 40 and PGW 20. The default EPS bearer is a transfer path that is not the one which satisfies the QoS level required by the specific flow but is the one which enables communication between UE 10 and PGW 20.

(4) UE 10 performs an authentication procedure for acquiring a local IP address from access network B (S106). The procedure is executed by the combination of the procedure between UE 10 and AR 60 and the procedure between AR 60 and PGW 20, as the method conventionally done for DMIPv6. AR 60 is installed in the coverage area for UE 10, and is an access router that UE 10 connects. PGW 20 is an entity that is selected based on the information previously held by UE 10. An authentication and access permission processes are performed by PGW 20 or AR 60, from the profiles such as the identification information of UE 10, the subscriber data, etc., based on the service policy.

(5) The UE 10 that is authorized and permitted to access is assigned a local IP address by AR 60, as in the conventional method of DMIPv6 (S108). The local IP address to be assigned is an IPv4 or IPv6 address, and is used as Care-of-Address (CoA) of DSMIPv6. The method of assignment is assumed to be implemented based on DHCP that is widely used in the Internet or a stateless IP address assignment procedure, for example.

(6) A setup for security association in order to transmit/receive encrypted DSMIPv6 control messages between UE 10 and PGW 20 is implemented (S110). The procedure is assumed to be performed based on IKEv2, EAP, following the conventional DMIPv6 technique, for example. At this step, PGW 20 gives notice of an IPv6 address or IPv6 network prefix to UE 10.

UE 10 sets the assigned IPv6 address as Home Address (HoA). When the network prefix is assigned, HoA is generated based on that network prefix. This procedure enables UE 10 to perform a position register process to PGW 20 in safety, using encrypted control messages.

(7) UE 10 transmits a position register request defined in DSMIPv6 to PGW 20 (S112). The message includes the identification information of UE 10, HoA of UE 10 and CoA as positional information. UE 10 can also make a request for assignment of HoA in IPv4 address, by this message based on DSMIPv6. Further, the message is adapted to include transceiver identification information. In the present embodiment, the message included with the transceiver identification information indicating the second transceiver is transmitted.

(8) PGW 20 establishes a DSMIPv6 transfer path and transmits a position register response to UE 10 (S114). The position register response includes HoA and CoA. It is also possible to assign HoA in an IPv4 address by the request at Step 4. UE 10 having received the position register response also completes a transfer path establishment process. Further, PGW 20 controls the transceiver identification information described in the position register request and the established transfer path in association with each other. In the present embodiment, the DSMIP transfer path and the second transceiver are associated and controlled as shown in FIG. 5.

The UE performs the procedure of establishing the EPS bearer by means of the first transceiver 110 connected to access network A and performs the procedure of establishing the DSMIP transfer path by means of the second transceiver 120 connected to access network B. Though, in the above description, the DSMIP transfer path is established after the procedure of default EPS bearer establishment, DSMIP transfer path may be established first, then the default EPS bearer may be established. In this case, S100 to S104 should be effected after execution of S106 to S114.

(9) After establishment of the default bearer, UE 10 transmits a specificbearer generation request to MME 30 (S116). The message includes flow identification information and the QoS level. The flow identification information is information that enables identification of an application and can use a Traffic Flow Template (TFT) comprising an IP address, port number and protocol number. It is also possible to use the flow ID as the flow information when both UE 10 and PGW 20 have shared TFTs and flow IDs identifying the TFTs in advance. With this, UE 10 gives notice of the flow requesting a handover and the QoS level corresponding to the flow.

(10) MME 30 receives the specific bearer generation request from UE 10 and executes an establishment process of a specific EPS bearer (EPS bearer 2) (S118). The procedure is performed following the conventional procedure, by transmitting/receiving of control messages between UE 10, eNB 50, MME 30, SGW 40 and PGW 20. The specific EPS bearer is a transfer path that satisfies the QoS level required for the specific flow requested by UE 10 and a transfer path for enabling communication between UE 10 and PGW 20.

By Steps S116 and S118, UE 10 is able to establish a transfer path that guarantees communication quality required by the application and implement communication by that transfer path. Accordingly, data transmitting/receiving of TFT1 and TFT2 is started (Step S120).

At this point, it is possible to assign a single specific EPS bearer to a plurality of applications. The specific bearer generation request at Step S116 in this case may be made by including a plurality of TFTs in a single specific bearer generation request message, or by transmitting a specific bearer generation request message for every TFT. In the present embodiment, TFT1 and TFT2 are transmitted by a single specific bearer generation request included there with. As a result, it is possible to start transmitting/receiving of application data identified by TFT1 and TFT2 through the generated specific EPS bearer 2.

Here, as has been described with FIGS. 2 and 3, UE 10 and PGW 20 store flow management tables for managing the correspondence between transfer paths and flows. In PGW 20, the transfer path of flow 1 identified by TFT1 is associated with EPS bearer 2 and stored. Also, the transfer path of flow 2 identified by TFT2 is associated with EPS bearer 2 and stored (FIG. 4 (b)). Similarly in UE 10, the transfer path of flow 1 identified by TFT1 is associated with EPS bearer 2 and stored. Also, the transfer path of flow 2 identified by TFT2 is associated with EPS bearer 2 and stored (FIG. 4(a)).

### [4. Handover Procedure]

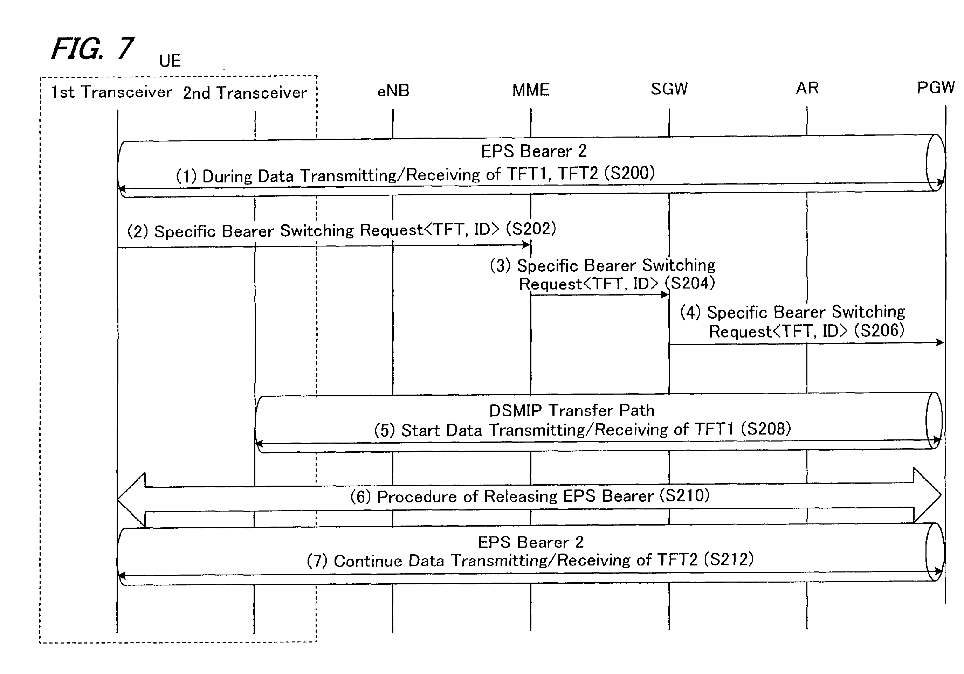

Next, the handover procedure will be described with reference to FIG. 7. As the initial state at the time of a handover, it is assumed that the applications identified by TFT1 and TFT2 are being communicated through EPS bearer 2, by the communication path establishment procedures described above. Under this condition, a procedure of handing over the application of TFT1 alone among a plurality of flows being communicated, to the DSMIP transfer path (access network B) will be illustrated.

(1) UE 10 is transmitting/receiving data of the applications identified by TFT1 and TFT2 via PGW 20 (S200).

(2) UE 10 transmits a specific bearer switching request to MME 30 (S202). The control information is transmitted by being included with the TFT that identifies the application to be handed over and a transceiver identifier as the information indicating that a handover is to be done to the DSMIP transfer path. Specifically, TFT1 and the transceiver identifier indicating the second transceiver are given and transmitted.

(3) MME 30 forwards the specific bearer switching request transmitted from UE 10 to SGW 40 (S204).

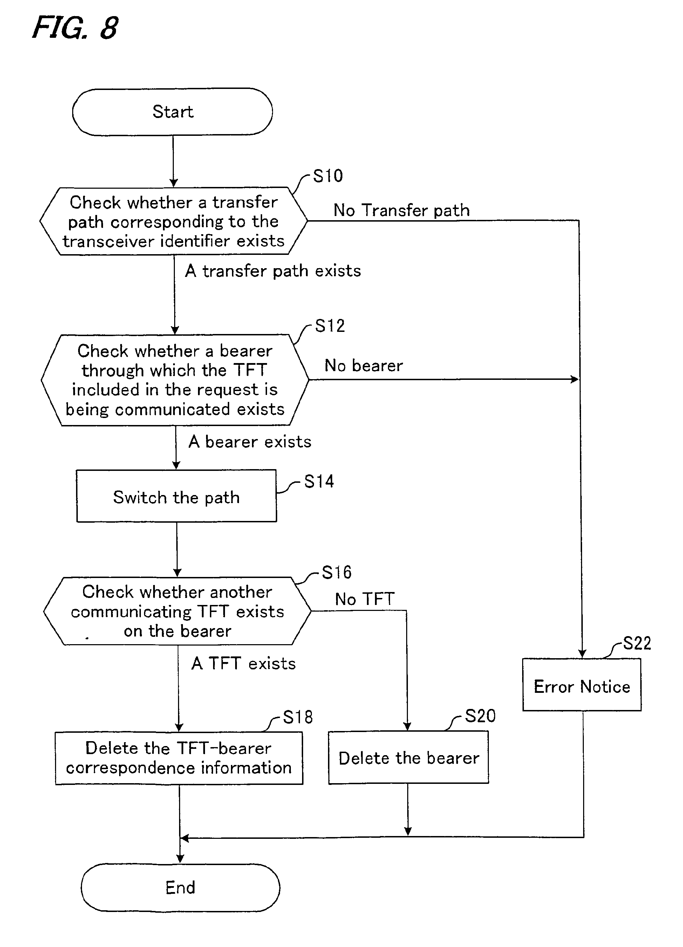

(4) SGW 40 forwards the specific bearer switching request transmitted from MME 30 to PGW 20 (S206). PGW 20 receives the specific bearer switching request transmitted from SGW 40. At this point, PGW 20 executes a specific bearer switching request receiving process based on the specific bearer switching request. Now, description will be made using the processing flow in FIG. 8.

First, based on the transceiver identifier included in the specific bearer switching request, DSMIP transfer path management table 234 in FIG. 5 is referred to. Then, it is checked whether the DSMIP transfer path corresponding to the transceiver identifier exists (Step S10 in FIG. 8). In the present embodiment, "the second transceiver" is included as the transceiver identifier information, and it is checked whether a transfer path (a DSMIP transfer path in the present embodiment) corresponding to this "second transceiver" exists. It is also checked whether a handover of TFT1 to the DSMIP transfer path has been requested.

Herein, when it is determined that the transfer path (the DSMIP transfer path in the present embodiment) does not exist, an error notice is given to end the process (Step S10; no transfer path -> Step S22). In this case, communication of TFT1 will be continuously carried over through EPS bearer 2.

On the other hand, when it is determined that there exists a transfer path (Step 10; a transfer path exists), it is checked whether there exists the EPS bearer through which the TFT indicated by the control information has been communicated (Step S12). At this point, if the bearer does not exist, an error notice is given to end the process (Step S12; no bearer -> Step S22). In this case, the communication of TFT1 will be continuously carried over through EPS bearer 2. In the case of the present embodiment, it is confirmed that TFT1 has been communicated through EPS bearer 2.

Next, when it is confirmed that the bearer exists (Step S12; the bearer exists), in response to the specific bearer switching request, the path of the application identified by the TFT included in the control information is switched from EPS bearer 2 to the DSMIP transfer path (Step S14). In the present embodiment, the path of TFT1 is switched to the DSMIP transfer path to start transmission and reception.

Next, after switching the path, it is checked whether there is any other application that is communicating through EPS bearer 2, or whether there is TFT (Step S16).

Here, if it is determined at Step S14 that there exists another application (Step S16; TFT exists), the information on the transfer path for the TFT that identifies the application to be handed over is deleted (Step S18). In the present embodiment, TFT 2 is being communicated through EPS bearer 2. When another application is being communicated as in this case, the procedure of deleting EPS bearer 2 is not implemented, and in PGW 20 the relational information between TFT1 and EPS bearer 2 for transmitting TFT1 to EPS bearer 2 is deleted (Step S18).

On the other hand, if there exists no another flow that is being communicated on the bearer, EPS bearer 2 itself is deleted (Step S20). The deleting procedure is performed, following the conventional procedure, by transmitting/receiving control information between SGW 40, MME 30 and UE 10. Returning now to the procedure in FIG. 7 once again, description will be continued.

(5) UE 10 and PGW 20 start data transmitting/receiving of TFT1 on the DSMIP transfer path (S208 in FIG. 7). (6) Following the conventional technique, a procedure of releasing EPS bearer 2 is performed (Step S210).

(7) Data transmitting/receiving of TFT2 is continuously carried over on EPS bearer 2 (S212).

As above, it is possible to perform communication by switching only the application that is selected by UE 10 from a plurality of applications having been communicated through the EPS bearer, to the DSMIP transfer path. On the other hand, communication of other applications can be continuously carried over on the EPS bearer. The switching request can be made without using any control message for a switching request based on DSMIP but by adding a new TFT and transceiver identifier to the specific bearer switching request based on the control information of access network A.

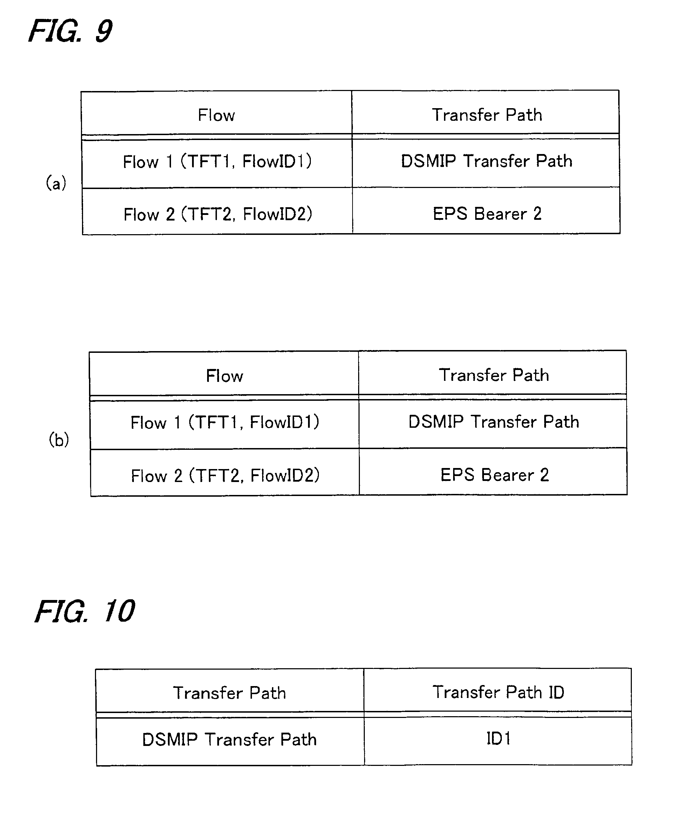

The state of flow management table 132 in this case is shown in FIG. 9 (a) and the state of flow management table 232 is shown in FIG. 9 (b). As shown in FIG. 9, flow 1 (TFT1) is communicated through the DSMIP transfer path while flow 2(TFT2) is communicated through EPS bearer 2.

In the present embodiment, a handover may be performed by revising within access network 1 only. That is, this method is more versatile because a handover can be done in the same way even if the transfer path established in access network 2 is not the DSMIP transfer path but is established by another mobile management procedure.

As above, UE 10 is able to hand over only a specific flow that has been communicated on the communication path via access network A, to the communication path via access network B. Further, the handover procedure in that case can be performed by the control information based on access network A.

Conversely, in order to perform a handover so as to cause flow 2 (TFT2) being communicated on the DSMIP transfer path to communicate trough EPS bearer 2, EPS bearer 2 is managed in association with the first transceiver in the same manner as the DSMIP transfer path is managed in association with the second transceiver as shown in FIG. 5, and UE 10 transmits a specific bearer switching request included with the flow information and transceiver identifier, whereby the transfer path can be also switched to EPS bearer 2. The switching procedure of transfer paths and the process in each equipment can be done in the same manner as in the case where a handover is performed from EPS bearer 2 to the DSMIP transfer path as already described.

### [5. Variational Example]

As the embodiment of this invention has been described in detail with reference to the drawings, the specific configuration should not be limited to this embodiment. Designs and others that do not depart from the gist of this invention should also be included in the scope of claims.

Further, though, in description of the above embodiment, the transceiver identifier of UE 10 is used as the information for identifying the DSMIP transfer path, it is possible to use a transfer path ID as another example. In this case, it is possible to determine a transfer path ID in such a manner that PGW 20 having received a position register request at Step S112 in FIG. 6 determines the transfer path ID for the DSMIP transfer path to be established and sends a position register response included with the transfer path ID, to UE 10 at Step S114; or UE 10 determines the transfer path ID and transmits a position registering request included with the transfer path ID, to PGW 20 at Step S112. In this case, UE 10 and PGW 20 are not managed by the DSMIP transfer path management table as shown in FIG. 5 but by making the DSMIP transfer path correspondent to the assigned transfer path ID as shown in FIG. 10.

UE 10 requests switching by transmitting a TFT and transfer path ID when transmitting a specific bearer switching request as a handover request for a handover procedure. The other procedures can be done similarly by substituting the transceiver identifier with the transfer path ID in the above-described procedures.

Further, the transceiver identifier may be information that identifies an access network. When access networks are constructed based on radio access systems different to each other, information representing each access system, such as LET, WiMAX, etc., may be used. When access networks are managed by different agencies, agency codes may be used.

In this case, UE 10 requests switching by transmitting a TFT and access network identifier when transmitting a specific bearer switching request as a handover request for a handover procedure. The other procedures can be done similarly by substituting the transceiver identifier with the access network identifier in the above-described procedures.

### Description of Reference Numerals

| | | |
|---|---|---|
| 1 | mobile communication system | |
| | 10 UE | |
| | 100 | controller |
| | 110 | first transceiver |
| | 120 | second transceiver |
| | 130 | storage |
| | | 132 flow management table |
| | 140 | bearer establishment processor |
| | 150 | DSMIPv6 processor |
| | 160 | packet transceiver |
| 20 | PGW | |
| | 200 | controller |
| | 210 | transceiver |
| | 230 | storage |
| | | 232 flow management table |
| | | 234 DSMIP transfer path management table |
| | 240 | bearer establishment processor |
| | 250 | DSMIPv6 processor |
| | 260 | packet transceiver |
| 30 | MME | |
| 40 | SGW | |
| 50 | eNB | |

## Claims

1. A control station which is set with a path for performing communication of a plurality of flows with a mobile station connectable to, a first access network in which a bearer transfer path that guarantees a predetermined QoS has been established, and a second access network in which a transfer path different from the first access network has been established, by way of the transfer path of the first access network, comprising:
a specific bearer switching request receiving means for receiving a specific bearer switching request including information on a flow from a mobile station; and,
a switching means for switching the communication path of the flow included in the specific bearer switching request, from a first access network to a second access network.

2. The control station according to Claim 1, wherein for other than the flow included in the specific bearer switching request, communication is continued through the path set on the first access network.

3. The control station according to Claim 1 or 2, wherein the specific bearer switching request further includes a transceiver identifier representing a transfer path, and,
when the transfer path corresponding to the transceiver identifier included in the specific bearer switching request has been established in the second access network, the switching means switches the path of the flow included in the specific bearer switching request to the second access network.

4. A mobile station connectable to, a first access network in which a bearer transfer path that guarantees a predetermined QoS has been established, and a second access network in which a transfer path different from the first access network has been established, and set with a path for performing communication of a plurality of flows with a control station by way of the transfer path of the first access network, comprising:
a specific bearer switching request transmitting means for transmitting a specific bearer switching request including information on a flow to be switched to a transfer path of a second access network, among a plurality of flows being communicated byway of a transfer path of a first access network, to the control station.

5. A mobile communication system comprising:
a mobile station connectable to, a first access network in which a bearer transfer path that guarantees a predetermined QoS has been established, and a second access network in which a transfer path different from the first access network has been established; and
a control station set with a path that performs communication of a plurality of flows with the mobile station by way of the transfer path of the first access network, wherein
the mobile station comprising:
a specific bearer switching request transmitting means for transmitting a specific bearer switching request including information on a flow to be switched to the transfer path of the second access network, among the plurality of flows being communicated by way of the transfer path of the first access network, to the control station, and
the control station comprising:
a specific bearer switching request receiving means for receiving the specific bearer switching request including information on the flow from the mobile station; and,
a switching means for switching a communication path of the flow included in the specific bearer switching request, from the first access network to the second access network.
